# EUROPEAN PATENT APPLICATION

(11) **EP 1 450 566 A1**
(43) Date of publication of application: **25.08.2004**
(21) Application number: 02802698.7
(22) Date of filing: 10.10.2002
(51) Int. Cl.: H04N 9/64, H04N 1/46, H04N 1/60, G06T 1/00

(54) **IMAGE INFORMATION TRANSMITTING METHOD AND IMAGE INFORMATION PROCESSOR**

(30) Priority: 08.11.2001 JP 2001343753
(71) Applicant: Sony Corporation, Tokyo 141-0001 (JP)
(72) Inventor: DEGUCHI, Tatsuya c/o SONY CORPORATION, Shinagawa-ku, Tokyo 141-0001 (JP); KATOH, Naoya c/o SONY CORPORATION, Shinagawa-ku, Tokyo 141-0001 (JP)
(74) Representative: DeVile, Jonathan Mark, Dr.
(86) International application number: PCT/JP2002/010556
(87) International publication number: WO 2003/041418

(57) **Abstract**

This invention is an image information processing apparatus for converting image data coded in a standard color space to data suitable for an image device to which the image data should be outputted. In an image processing unit (40), data color-corrected for each output device by a color image device correction processing unit (41) is converted to output reference color space data such as e-sRGB or e-sYCC, a directory is prepared in a flash memory (50) by a data saving processing unit (42), and the data corrected to each image device is saved into the prepared directory. Thus, when using the image data coded in the standard color space, an image data group converted to color characteristics suitable for specific purposes is efficiently managed.

## Description

### Technical Field

This invention relates to an image signal transmission information and an image information processing apparatus for outputting a color image.

### Background Art

Color image data picked up by a digital camera is recorded in various flash memories, mainly in a format conformable to DCF (Design Rule for Camera File System) Version 1.0 [JEIDA-49-2-1998]. This format employs an sRGB color space, which is a standard color space prescribing color characteristics such as the gradation characteristic and color gamut (color reproducing range) of a CRT monitor for a personal computer. As its background, it is assumed that most of images picked up by a digital camera are displayed on a PC monitor. However, as digital cameras have been recently popularized, there have been more opportunities that color images are not only displayed on a PC monitor but also displayed on a home TV or outputted to a color printer via a home PC or directly.

The DCF format employs JPEG for compression and an sRGB color space, as shown in the following Table 1 of file structure.

**Table 1**

| (DCF format file structure) | | | | | | |
|---|---|---|---|---|---|---|
| Compression/Non-Compression | Number of Pixels | Screen Aspect | Color-Difference Sampling | Compression Rate | Huffman Table | Color Space |
| Compression (JPEG) | Not Prescribed | Not Prescribed | 4:2:2 or 4:2:0 | Not Prescribed | Typical | sRGB |

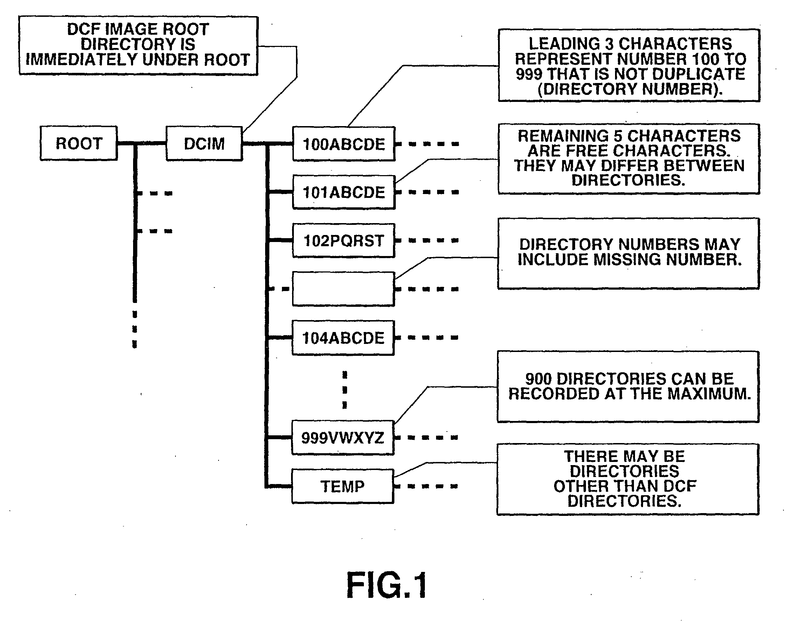

In the DCF format, as its directory structure is shown in Fig.1, a DCF image root directory DCIM is arranged immediately under the root, and under this DCF file image root directory DCIM, DCF directories with directory numbers each of which is represented by eight characters are arranged. Of eight characters representing a directory number, the leading three characters represent a number 100 to 999 that is not duplicate and the remaining five characters are free characters. The directory numbers may include a missing number. The DCF image root directory DCIM can record 900 directories at the maximum. The DCF image root directory DCIM may include directories other than DCF directories.

As the format of image data, JPEG2000 [ITU-T Rec.T.801] extended from the JPEG format (where each of RGB data has a bit depth of eight bits) employed also in DCF and color spaces that can cover a color reproducing range perceptible to human beings are considered. Of these, an scRGB color space (scene reference color space) [IEC61966-2.2] that can hold data linear to the quantity of light of an actual scene, a color space (output reference color space) in which color correction suitable for output of this data or suitable for a display device has been performed, an extended sRGB color space (e-sRGB: IEC61955-2.1 Annex G/Annex F) and the like are now being internationally standardized.

When not only the conventional monitor-based RGB eight-bit sRGB color space but also the 16-bit sc-RGB color space, the extended sRGB (e-sRGB) and the like are used as image data formats, the capacity of media for storing image data needs to be extended. In this regard, as increase in resolution of image, which contributes higher image quality of digital camera images, has been intensified and the image data size has been increased, the capacity of flash memories has been increased accordingly. Also in the future, extension of the capacity of media such as flash memory is expected to a large extent.

Meanwhile, in most cases, images picked up by digital cameras have the file structure conformable to the above-described DCF format and images that are color-corrected on the basis of techniques of individual manufacturers within the cameras are saved in YCC, which is a luminance/chromaticity separation space. The images may have a YCC value including a color that is outside of the sRGB color gamut. On the other hand, the color gamuts of home TVs, liquid crystal monitors and various color printers often differ from the sRGB color gamut. Particularly a color printer has a color expression system (color expression based on reflected color) that is fundamentally different from that of a CRT monitor as a self-emitting type device (light source color device), which is the standard of the sRGB color space. In the case of a color printer, the color gamut is broad in a dark region but is narrow in a bright region. Therefore, when a printer output is assumed, color correction should be performed in consideration of the color gamut. In this manner, as various outputs are used in an application such as a digital still camera, there arises a problem that when an image color-corrected on the assumption of use in a certain device is outputted from or displayed on another device, gradation failure may occur in some regions. Such a problem occurs in the following case. That is, since an image picked up by a current digital camera is processed on the assumption of being observed on a CRT monitor, which fundamentally has the sRGB color space, and the image is ultimately stored in the JPEG YCC format conformable to the DCF format, as described above, the problem occurs when this image data is outputted to a color image device other than a CRT monitor, such as a color printer or a home TV. In the existing system, for example, when outputting JPEG YCC data picked up by a digital camera or sRGB data displayed on a CRT monitor to a printer, a printer driver or the like performs color conversion of the image data to color data in consideration of the color gamut of the printer and outputs the color data.

### Disclosure of the Invention

It is an object of the present invention to provide a new image information transmission method and image information processing apparatus that enable solving the problem of the conventional image processing technique as described above.

It is another object of the present invention to provide an image information transmission method and an image information processing apparatus that efficiently manage a group of image data converted to color characteristics suitable for respective purposes with respect to the same content.

In the present invention, for example, by using an extended color space such as scRGB or e-sRGB and saving an image picked up by a digital camera into various devices, images processed for various color image devices are saved with respect to an image of one scene picked by the digital camera. That is, in an image information transmission method according to the present invention, an image data group obtained by converting image data coded in a standard color space to color characteristics corresponding to each of various color image devices is read out or written, using a different folder prepared for each device.

In another image information transmission method according to the present invention, an image data group obtained by converting image data coded in a standard color space to optimum color characteristics for each of various color image devices is read out or written, using a different file extension prepared for each device.

In still another image information transmission method according to the present invention, an image data group obtained by converting image data coded in a standard color space to optimum color characteristics for each of various color image devices is read out or written, using both a different folder and file extension prepared for each device.

In still another image information transmission method according to the present invention, an image data group obtained by converting image data coded in a standard color space to optimum color characteristics for each of various color image devices is transmitted, by using one of data group as standard data and holding differential data between other data groups and the standard data as the others of data group.

In still another image information transmission method according to the present invention, color image data is held and the image data group is read out or written, using a different folder prepared for each device.

According to the present invention, there is also provided an image information processing apparatus for converting image data coded in a standard color space to data suitable for an image device to which the image data should be outputted, the apparatus including an image processing unit for converting an image data group obtained by converting image data coded in a standard color space to optimum color characteristics for each of various color image devices, to data suitable for an image device to which the image data coded in the standard color space should be outputted, and saving the converted data to storage means, using a different folder prepared for each device.

According to the present invention, there is also provided an image information processing apparatus for converting image data coded in a standard color space to data suitable for an image device to which the image data should be outputted, the apparatus including an image processing unit for converting an image data group obtained by converting image data coded in a standard color space to optimum color characteristics for each of various color image devices, to data suitable for an image device to which the image data coded in the standard color space should be outputted, and saving the converted data to storage means, using a different file extension prepared for each device.

According to the present invention, there is also provided an image information processing apparatus for converting image data coded in a standard color space to data suitable for an image device to which the image data should be outputted, the apparatus including an image processing unit for converting an image data group obtained by converting image data coded in a standard color space to optimum color characteristics for each of various color image devices, to data suitable for an image device to which the image data coded in the standard color space should be outputted, and saving the converted data to storage means, using both a different folder and file extension prepared for each device.

According to the present invention, there is also provided an image information processing apparatus for converting image data coded in a standard color space to data suitable for an image device to which the image data should be outputted, the apparatus including an image processing unit for saving one of image data group obtained by converting image data coded in a standard color space to optimum color characteristics for each of various color image devices, as standard data, and differential data between other data groups and the standard data as the others of data group to storage means.

The other objects of the present invention and specific advantages provided by the present invention will be further clarified by the following description of an embodiment referring to the drawings.

### Brief Description of the Drawings

Fig.1 is a view schematically showing a directory structure of the DCF format.
Fig.2 is a block diagram showing a structure of an essential part of a digital camera to which the present invention is applied.
Fig.3 is a flowchart showing the procedures of file saving processing in the digital camera.
Fig.4 is a view schematically showing a directory structure in the case of saving data so that the data can be identified by a folder name within the framework of the DCF format in the digital camera.
Fig.5 is a view schematically showing a directory structure in the case of saving data so that the data can be identified by a file extension within the framework of the DCF format in the digital camera.
Fig.6 is a view schematically showing a directory structure in the case of saving data so that the data can be identified by a folder name outside of the framework of the DCF format in the digital camera.
Fig.7 is a view schematically showing a directory structure in the case of saving data so that the data can be identified by a file extension outside of the framework of the DCF format in the digital camera.
Fig.8 is a view schematically showing an example of saving differential data from basic data in the digital camera.
Fig.9 is a flowchart showing the procedures of image reading processing on the output device side.

### Best Mode for Carrying Out the Invention

An embodiment of the present invention will now be described in detail with reference to the drawings.

In the following description, it is considered that a digital camera simultaneously records to a flash memory or the like not only data obtained by converting a picked-up image to JPEG YCC data (DCFbasic file) conformable to the conventional DCF format data but also data obtained by converting the picked-up image to an image suitable for other color image devices such as color printer and LCD, or raw data obtained by performing white balance correction of data from a CCD image sensor.

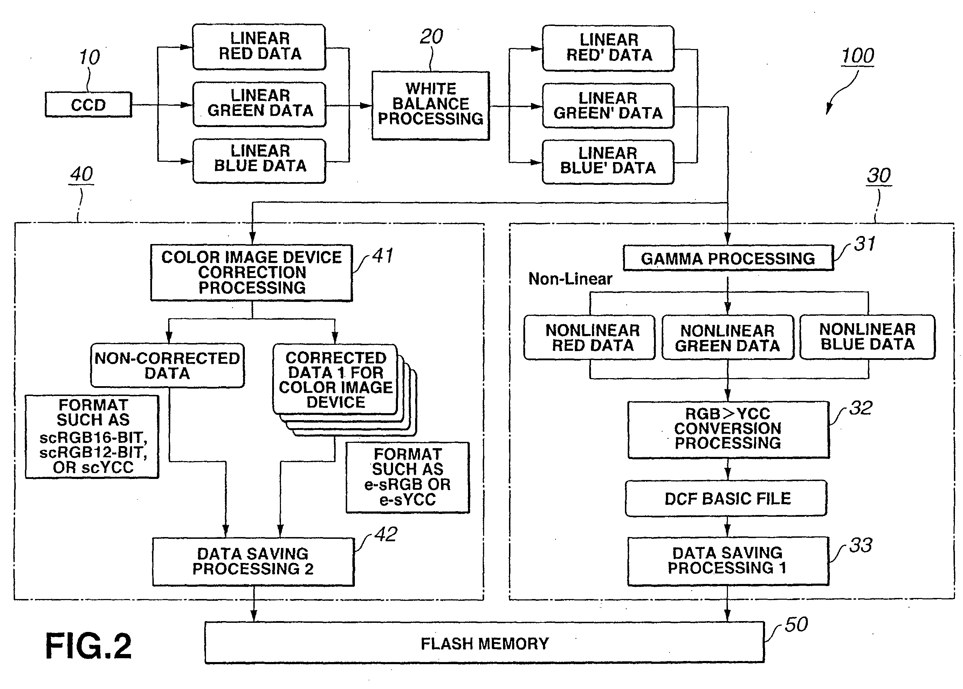

First, preparation and saving of a DCF basic file in a digital camera to which the present invention is applied will be described with reference to Fig.2.

This digital camera 100 has, as its main constituent elements, a white balance processing unit 20 supplied with image data R, G and B of primary colors acquired by a CCD image sensor 10, first and second image processing units 30 and 40 supplied with image data R', G' and B' to which white balance adjustment processing has been performed by the white balance processing unit 20, and a flash memory 50 for saving data obtained by processing the image data R', G' and B' by the first or second image processing unit 30 or 40.

In this digital camera 100, the white balance processing unit 20 performs white balance adjustment processing to the image data R, G and B of primary colors acquired by the CCD image sensor 10 and supplies the image data R', G' and B' to which white balance adjustment processing has been performed, to the first and second image processing units 30 and 40.

The first image processing unit 30 is adapted for performing similar processing to the conventional processing to the image data R', G' and B' to which white balance adjustment processing has been performed, to prepare a DCF basic file, and saving the DCF basic file to the flash memory 50. The first image processing unit 30 has a gamma processing unit 31, an RGB/YCC converting unit 32, and a data saving processing unit 33. In the first image processing unit 30, the gamma processing unit 31 performs gamma correction processing to the image data R', G' and B' to which white balance processing has been performed, and supplies image data R", G" and B" to which gamma correction has been performed, to the RGB/YCC converting unit 32. The RGB/YCC converting unit 32 converts the image data R", G" and B" to which gamma correction has been performed, to YCC data expressed by luminance data Y and color-difference data Cr, Cb and thus prepares a DCF basic file.

Moreover, the data saving processing unit 33 prepares a DCIM directory in the flash memory 50 and directories for saving the DCF basic file under the DCIM directory, for example, 100 MSDCF directories, and saves the DCF basic file into the directories.

The second image processing unit 40 is adapted for preparing data for each color image device from the image data R', G' and B' to which white balance adjustment processing has been performed, and saving the data to the flash memory 50. The second image processing unit 40 has a color image device correction processing unit 41 and a data saving precessing unit 42. In the second image processing unit 40, the color image device correction processing unit 41 performs color correction for each device to the image data R', G' and B' to which white balance processing has been performed, in accordance with data to be saved, that is, to what color image device the data is to be outputted, or whether raw data is to be saved. For example, in the case of performing color correction for an ink jet printer, color correction is performed using a virtual gamut that covers the color gamuts of currently popularized printers, as a target color gamut. That is, color correction is performed in consideration of color characteristics including the color gamut of an output device. The data corrected for each output device is converted to output reference color space data such as e-sRGB or e-sYCC. Raw data is converted to scRGB 16-bit linear data, scRGB 12-bit linear data, or scYCC data.

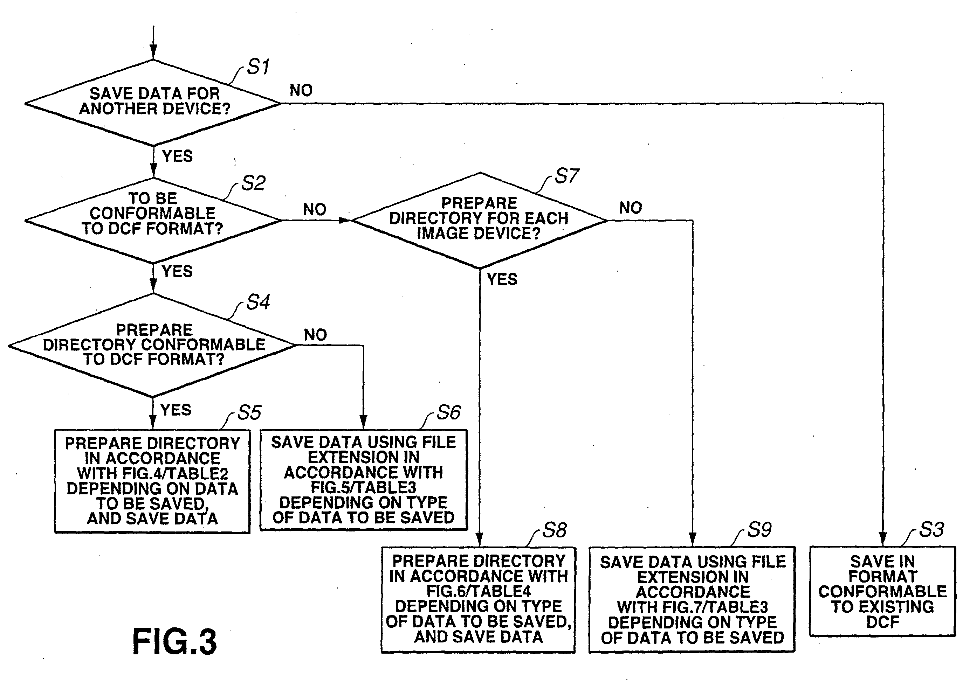

Moreover, the data saving processing unit 42 prepares directories within the flash memory 50 and saves the data corrected for each image device to the prepared directories or saves the image data to which white balance processing has been performed, to the prepared directories, in accordance with the procedures shown in the flowchart of Fig.3. Specifically, first at step S1, the data saving processing unit 42 judges whether to save the data for another device. If the result of judgment at step S1 is YES, that is, if the data is to be saved for another device, the processing goes to the next step S2. If the result of judgment is NO, that is, if the data is not to be saved for another device, the processing goes to step S3 and the data is saved in a format conformable to the existing DCF format.

At step S2, whether the data is to be conformable to the DCF format or not is judged. If the result of judgment is YES, that is, if the data is to be conformable to the DCF format, the processing goes to step S4. If the result of judgment is NO, that is, if the data is not to be conformable to the DCF format, the processing goes to step S7.

At step S4, whether to prepare a directory conformable to the DCF format is judged. If the result of judgment is YES, that is, if a directory conformable to the DCF format is to be prepared, the processing goes to step S5. If the result of judgment is NO, that is, if a directory conformable to the DCF format is not to be prepared, the processing goes to step S6.

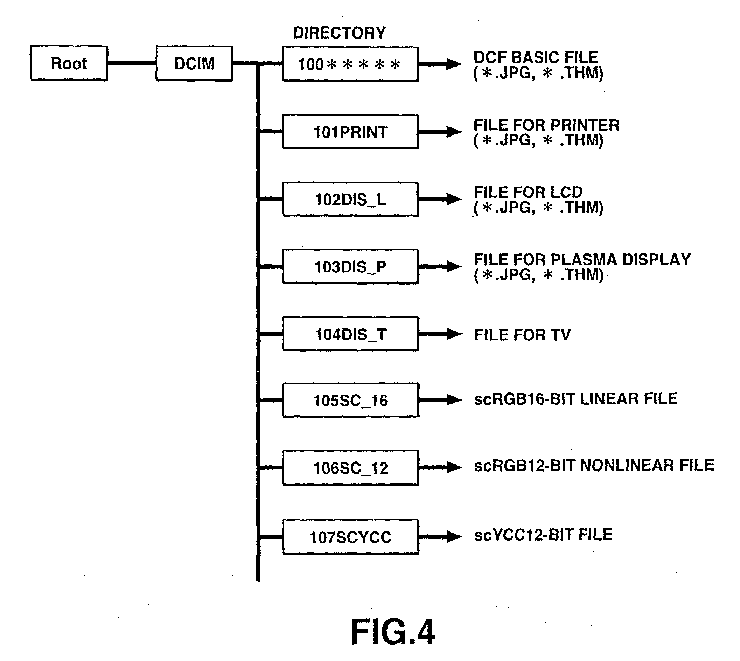

At step S5, a directory identifiable by a directory name within the framework of the DCF format is prepared in the flash memory 50 and the data is saved therein, as shown in Fig.4. Specifically, at this step S5, a directory for saving data for each image device, prepared by the color image device correction processing unit in the digital camera 100, or for saving data after white balance processing, is prepared under the DCIM directory. As the directory name of the prepared directory, a directory name for another application of the prepared image as shown in the following Table 2 is used. Each of these directory names consists of three numerals from 100 to 999 and five characters, as prescribed by the DCF format. To each prepared directory, data corrected for each image device or data after white balance adjustment is saved.

**Table 2**

| (DCF directory name) | |
|---|---|
| DCF Directory Name | Application |
| 1**PRINT | General printer |
| 1**PRI_I | Ink jet printer |
| 1**PRI_D | Thermal sublimation printer |
| 1**PRI_T | Fusion printer |
| 1**PRI_L | Laser printer |
| 1**DISPL | General display |
| 1**DIS_C | CRT monitor |
| 1**DIS_B | Broadcasting station monitor |
| 1**DIS_L | LCD |
| 1**DIS_P | Plasma display |
| 1**DIS_T | Home TV |
| 1**SC_16 | scRGB 16-bit linear data |
| 1**SC_12 | scRGB 12-bit nonlinear data |
| 1**SCYCC | scYCC |

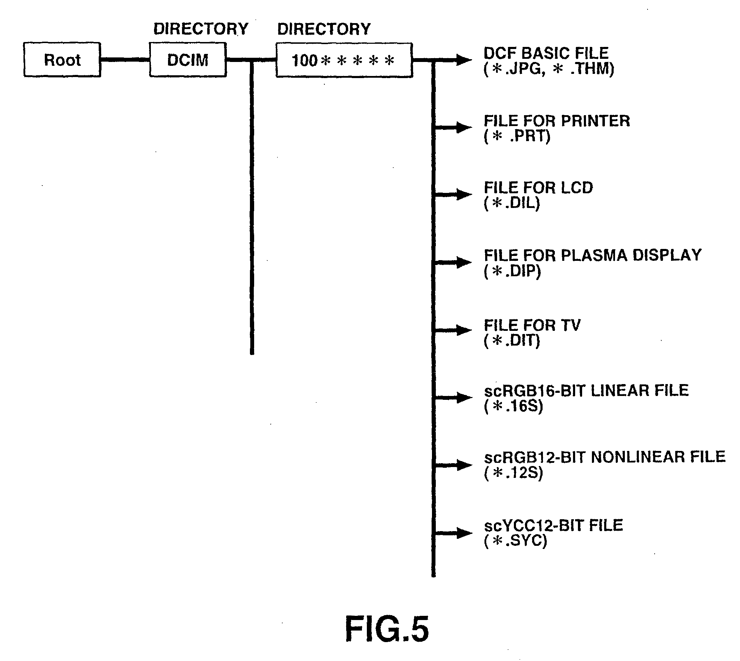

At step S6, data is saved as a data file identifiable by a file extension within the framework of the DCF format, as shown in Fig.5. Specifically, at this step S6, data for each image device, prepared by the color image device correction processing unit in the digital camera 100, or data after white balance adjustment, is saved to a similar directory to the directory where the DCF basic file is saved in the flash memory 50, using a different file extension depending on the type of the data. The file extensions to be used are file extensions shown in the following Table 3.

**Table 3**

| (file extension name) | |
|---|---|
| DCF Directory Name | Application |
| *.PR | General printer |
| *.PRI | Ink jet printer |
| *.PRD | Thermal sublimation printer |
| *.PRT | Fusion printer |
| *.PRL | Laser printer |
| *.DIS | General display |
| *.DIC | CRT monitor |
| *.DIB | Broadcasting station monitor |
| *.DIL | LCD |
| *.DIP | Plasma display |
| *.DIT | Home TV |
| *.16S | scRGB 16-bit linear data |
| *.12S | scRGB 12-bit nonlinear data |
| *.SYC | scYCC |

At step S7, whether to prepare a directory for each image device is judged. If the result of judgment at step S7 is YES, that is, if a directory for each image device is to be prepared, the processing goes to step S8. If the result of judgment is NO, that is, if a directory for each image device is not to be prepared, the processing goes to step S9.

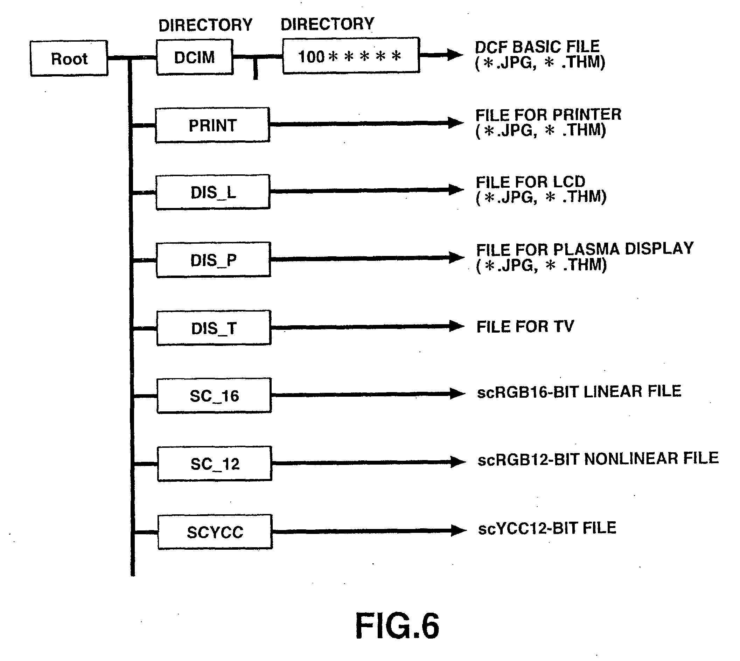

At step S8, a directory identifiable by a directory name outside of the framework of the DCF format is prepared in the flash memory 50 and data is saved into the directory, as shown in Fig.6. Specifically, at this step S8, a directory for saving data for each image device, prepared by the color image device correction processing unit in the digital camera 100, or data after white balance adjustment, is prepared in the flash memory 50. As the directory name of the prepared directory, a directory name for another application of the prepared image as shown in the following Table 4 is used. To each prepared directory, data corrected for each image device or data after white balance adjustment is saved.

**Table 4**

| (DCF directory name) | |
|---|---|
| DCF Directory Name | Application |
| PRINT | General printer |
| PRI_I | Ink jet printer |
| PRI_D | Thermal sublimation printer |
| PRI_T | Fusion printer |
| PRI_L | Laser printer |
| DISPL | General display |
| DIS_C | CRT monitor |
| DIS_B | Broadcasting station monitor |
| DIS_L | LCD |
| DIS_P | Plasma display |
| DIS_T | Home TV |
| SC_16 | scRGB 16-bit linear data |
| SC_12 | scRGB 12-bit nonlinear data |
| SCYCC | scYCC |

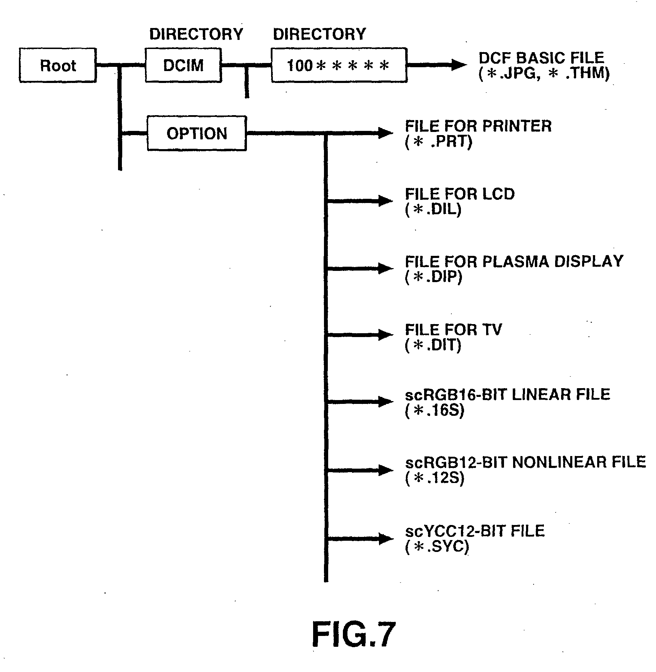

At step S9, data is saved as a data file identifiable by a file extension outside of the framework of the DCF format, as shown in Fig.7. Specifically, at this step S9, an OPTION directory is prepared in the flash memory 50. Then, data for each image device, prepared by the color image device correction processing unit in the digital camera 100, or data after white balance adjustment, is saved to the OPTION directory in the flash memory 50, using a different file extension shown in Table 3 depending on the type of the data.

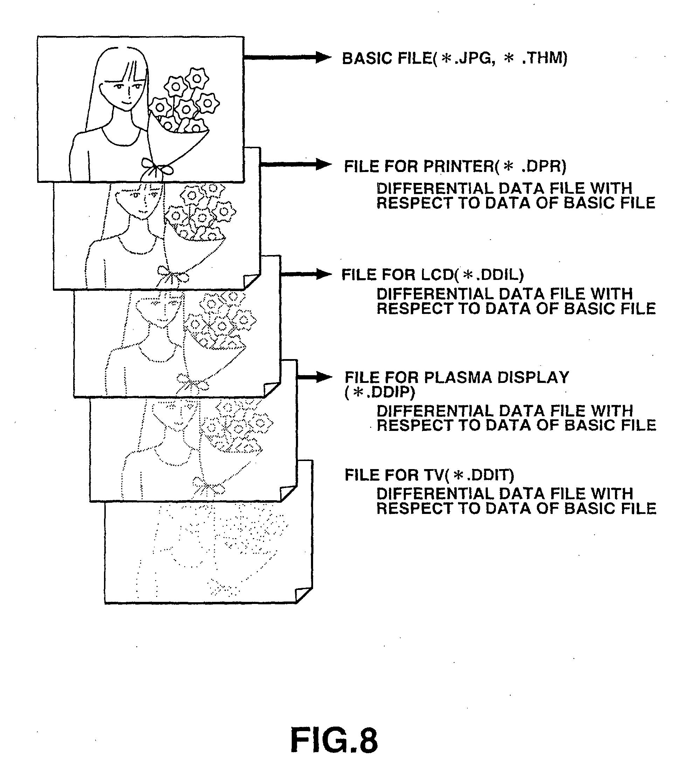

At step S5, data for each image device can also be saved using differential data within the framework of the DCF format, as shown in Fig.8. Specifically, differential data between the prepared data for color image device and the DCF basic file is prepared in the color image device correction processing unit. The prepared data group is in the e-sRGB or e-sYCC format, which is the output reference color space. As the extensions for the prepared data, extensions shown in the following Table 5 are used. The prepared data are saved to a similar directory to the directory where the DCF basic file is saved in the flash memory 50.

**Table 5**

| (file extension name) | |
|---|---|
| DCF Directory Name | Application |
| *.DPR | General printer |
| *.DPRI | Ink jet printer |
| *.DPRD | Thermal sublimation printer |
| *.DPRT | Fusion printer |
| *.DPRL | Laser printer |
| *.DDIS | General display |
| *.DDIC | CRT monitor |
| *.DDIB | Broadcasting station monitor |
| *.DDIL | LCD |
| *.DDIP | Plasma display |
| *.DDIT | Home TV |

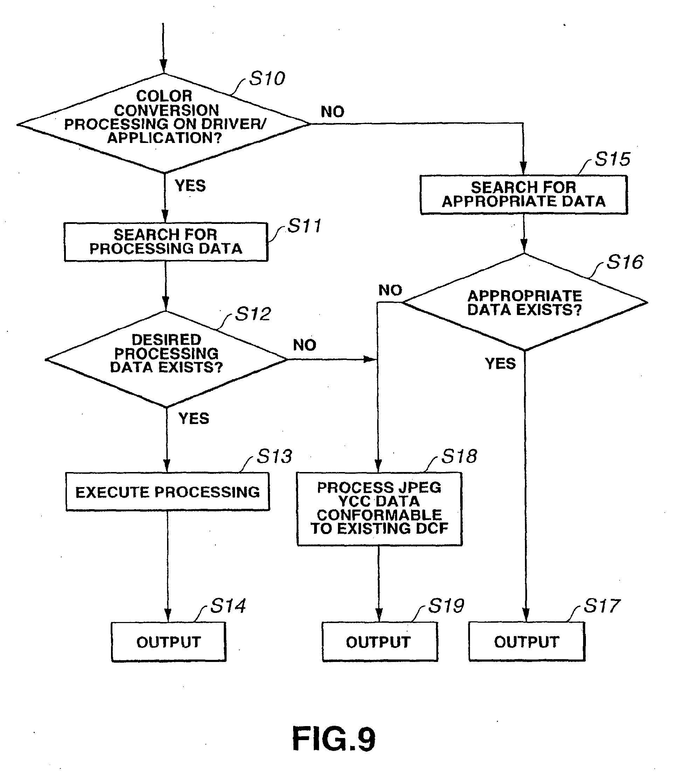

Reading of data taken in the flash memory 50 by the digital camera 100 will now be described with reference to Fig.9.

Specifically, on the output device side, when processing is performed via a driver of each device or via a personal computer (PC), the application on the PC carries out image output and display in accordance with the procedures shown in the flowchart of Fig.9.

On the output device side, first at step S10, whether to perform color correction processing at the driver or the personal computer (PC) is judged. If the result of judgment at step S10 is YES, that is, color correction processing on the driver application is to be performed, the processing goes to the next step S11. If the result of judgment is NO, that is, if color correction processing on the driver application is not to be performed, the processing goes to step S15.

At step S11, whether there is data of a scene reference color space format (scRGB 16-bit linear, scRGB 12-bit linear, or scYCC) in the flash memory 50 is searched for, using the information of the above-described directory name or file extension name.

At the next step S12, whether the driver application found desired data or not is judged. If the result of judgment at step S12 is YES, that is, if the driver application found desired data, the processing goes to step S13 and desired color correction processing is performed. Then, at the next step S14, the color-corrected image data is outputted to the output device. If the result of judgment at step S 12 is NO, that is, if the driver application did not find desired data, the processing goes to step S18 and processing of JPEG YCC data conformable to the existing DCF format is performed using the DCF basic file. Then, at the next step S19, the processed image data is outputted.

At step S15, whether there is output reference color space data suitable for the output device in the flash memory 50 is searched for, using the information of the directory name or file extension name.

At the next step S16, whether the driver application found desired data or not is judged. If the result of judgment at step S16 is YES, that is, if the driver application found desired data, the processing goes to step S17. Only conversion to the data format of the output device is performed without performing color correction processing, and the data is outputted. However, when the found data is differential data, image data suitable for the output device is prepared on the basis of the DCF basic file and the found differential data. Then, only conversion to the data format of the output device is performed without performing color correction processing, and the data is outputted. If the result of judgment at step S16 is NO, that is, if the driver application did not find desired data, the processing goes to step S18 and processing of JPEG YCC data conformable to the existing DCF format is performed using the DCF basic file. Then, at the next step S19, the processed image data is outputted.

### Industrial Applicability

As described above, conventionally, when performing color correction of camera picked-up image data suitable for an output device, color correction for the output device must be performed using the DCF basic file of a limited color gamut (JPEG YCC color gamut based on sRGB color space). However, in the present invention, more appropriate color correction can be performed by using data that has broader color gamut information and is more close to raw data from the CCD image sensor in the camera.

In the present invention, since data for output devices that can be expected to a certain extent is saved at the time of image pickup, an image of more appropriate colors can be outputted directly to the output devices without performing color correction by the driver of the output device or color correction based on an application on a PC.

In the present invention, the file saving technique within the framework of the DCF format enables output based on the conventional technique even in an output device that does not support the file saving technique of the present invention.

In the present invention, by identifyingpicked-up data as data already corrected for an output device, it is possible to avoid duplicate color correction at the driver on the output device side and output a desired color image.

Therefore, according to the present invention, when using image data coded in a standard color space for various purposes, image data groups converted to color characteristics suitable for the purposes can be efficiently managed with respect to the same content.

## Claims

1. An image information transmission method comprising reading out or writing an image data group obtained by converting image data coded in a standard color space to color characteristics corresponding to each of various color image devices, using a different folder prepared for each device.

2. An image information transmission method comprising reading out or writing an image data group obtained by converting image data coded in a standard color space to optimum color characteristics for each of various color image devices, using a different file extension prepared for each device.

3. An image information transmission method comprising reading out or writing an image data group obtained by converting image data coded in a standard color space to optimum color characteristics for each of various color image devices, using both a different folder and file extension prepared for each device.

4. An image information transmission method comprising transmitting an image data group obtained by converting image data coded in a standard color space to optimum color characteristics for each of various color image devices, by using one of data group as standard data and holding differential data between other data groups and the standard data as the others of data group.

5. The image information transmission method as claimed in claim 4, wherein color image data is held and the image data group is read out or written, using a different folder prepared for each device.

6. The image information transmission method as claimed in claim 4, wherein color image data is held and the image data group is read out or written, using a different file extension prepared for each device.

7. The image information transmission method as claimed in claim 4, wherein color image data is held and the image data group is read out or written, using both a different folder and file extension prepared for each device.

8. An image information processing apparatus for converting image data coded in a standard color space to data suitable for an image device to which the image data should be outputted,
the apparatus comprising an image processing unit for converting an image data group obtained by converting image data coded in a standard color space to optimum color characteristics for each of various color image devices, to data suitable for an image device to which the image data coded in the standard color space should be outputted, and saving the converted data to storage means, using a different folder prepared for each device.

9. An image information processing apparatus for converting image data coded in a standard color space to data suitable for an image device to which the image data should be outputted,
the apparatus comprising an image processing unit for converting an image data group obtained by converting image data coded in a standard color space to optimum color characteristics for each of various color image devices, to data suitable for an image device to which the image data coded in the standard color space should be outputted, and saving the converted data to storage means, using a different file extension prepared for each device.

10. An image information processing apparatus for converting image data coded in a standard color space to data suitable for an image device to which the image data should be outputted,
the apparatus comprising an image processing unit for converting an image data group obtained by converting image data coded in a standard color space to optimum color characteristics for each of various color image devices, to data suitable for an image device to which the image data coded in the standard color space should be outputted, and saving the converted data to storage means, using both a different folder and file extension prepared for each device.

11. An image information processing apparatus for converting image data coded in a standard color space to data suitable for an image device to which the image data should be outputted,
the apparatus comprising an image processing unit for saving one of image data group obtained by converting image data coded in a standard color space to optimum color characteristics for each of various color image devices, as standard data, and differential data between other data groups and the standard data as the others of data group to storage means.

12. The image information processing apparatus as claimed in claim 11, wherein the image processing unit saves color image data to the storage means and saves the image data group, using a different folder prepared for each device.

13. The image information processing apparatus as claimed in claim 11, wherein the image processing unit saves color image data to the storage means and saves the image data group, using a different file extension prepared for each device.

14. The image information processing apparatus as claimed in claim 11, wherein the image processing unit saves color image data to the storage means and saves the image data group, using both a different folder and file extension prepared for each device.
